# EUROPEAN PATENT APPLICATION

(11) **EP 2 363 250 A2**
(43) Date of publication of application: **07.09.2011**
(21) Application number: 10194917.0
(22) Date of filing: 14.12.2010
(51) Int. Cl.: B25J 9/00

(54) **Production system comprising a workpiece stocker, a dual-arm robot and a second robot**

(30) Priority: 19.01.2010 JP 2010008794
(71) Applicant: Kabushiki Kaisha Yaskawa Denki, Kitakyushu-shi, Fukuoka 806-0004 (JP)
(72) Inventor: HiranoO, Yusuke, Kitakyushu-Shi Fukuoka 806-0004 (JP); Matsuo, Tomohiro, Kitakyushu-Shi Fukuoka 806-0004 (JP)
(74) Representative: Gendron, Vincent Christian

(57) **Abstract**

A production system is configured with a workpiece (13), a workpiece stocker (12) on which the workpiece (13) is placed, a dual-arm robot (11) which is arranged at a transportation outlet of the workpiece stocker (12), and a second robot (21) which is arranged to face a forward portion of a torso (2) of the dual-arm robot (11).

## Description

### BACKGROUND OF THE INVENTION

### FIELD OF THE INVENTION

The present invention relates to a production system for manufacturing an article.

### DESCRIPTION OF THE RELATED ART

Working processes such as an assembling process and a transporting process rely on manpower, and necessity of specific tools and jigs hinders automation of these processes.

Even in an automated process, conventionally, one robot performs one kind of task and therefore requires a specific holding device responding to a component. A considerably large number of specific holding devices are required in an assembling process or a transporting process in which the number of man-hours and the number of components are large. For this reason, it is necessary to prepare specific devices in accordance with the number of components to be manufactured and the number of man-hours. Since a considerably large number of robots and production machines are required, automation cannot be achieved in a current space required for manual operation. Moreover, a space for production lines is also required to be considerably large.

In a process of transporting a component to a subsequent process, e.g., in a process of transporting a component between processing machines, typically, a large number of components placed at random are brought into a predetermined posture so as to be subjected to processing with ease, and then are transported to the subsequent process. For example, in a case of transporting a component, the posture of which is changed, to a subsequent process, a specific facility is required for temporarily placing the component on a temporal placement table or a posture changing device. Consequently, a considerably large space is required for installation of such a specific facility.

In a process of transporting a large number of components placed in a random fashion, a device called a parts feeder aligns the components prior to transportation to a subsequent process. Basically, a parts feeder is a relatively simple device which is designed and fabricated to respond to processing performance to be required for the purpose of handling components of only one kind. Consequently, such a parts feeder typically fails to achieve high processing performance, and is poor in ability to respond to a change of the kind of the components. In a case of handling various components, the parts feeder requires much time for setups. Thus, there arises a problem of degradation in productivity.

In view of the current circumstances described above, there has been required a production system capable of realizing efficient production in a space almost equal to a space required for manual operation, without using a specific device.

As a conventional production system, Japanese Unexamined Patent Application Publication No. 1994-320364 proposes a system that uses two horizontal multi-joint robots.

Such a conventional production system is configured with a combination of two horizontal multi-joint robots, an assembly workbench arranged on a forward side of each robot, a free flow conveyor serving as a transporting device causing a platen to move, a component supply bench arranged beside the robot to supply a small component, a component supply machine supplying a small component and a middle component, a component supply machine supplying a middle component and a large component, and the like, and includes a control device controlling the robots and the peripherals.

This production system merely selects and uses the robot for transportation in accordance with the size of the article. As a method of aligning targets to be transported, particularly, in cases where handling of various kinds of components is needed and high processing performance is required, there is used a method of aligning components using a robot including an image processing device (vision) . More specifically, this method is a method that involves acquiring information about a position and a posture of each component using a visual sensor such as a CCD camera, controlling each arm of a robot, based on this information, and causing the robot to perform a task of aligning the component. This method allows handling of various components only by switchover of operating programs in accordance with change in kind of a component, and therefore produces an advantage of reducing a time required for setups.

However, this method has the following problems. That is, a vision system becomes complicated, which results in degradation in cost performance. Further, it becomes difficult to improve processing performance since a relatively simple task, i.e., the alignment of the component is performed using the system which is complicated more than necessary.

### SUMMARY OF THE INVENTION

### DISCLOSURE OF THE INVENTION

### PROBLEMS TO BE SOLVED BY THE INVENTION

In a conventional production system, respective robots transport a component, based on a predetermined sequence. For this reason, the conventional production system fails to perform a task with subsequent processes taken into consideration, e.g., a task of aligning and transporting components placed at random.

In a production system including a vision system, use of the vision system causes change in visibility and contour correction of a workpiece because of daylight. Consequently, there arises a problem that an adjusting task becomes complicated.

As described above, a conventional production system is realized using specific accessories unique to the production system, e.g., specific tools and jigs, and a vision system. At present, however, it is desired to flexibly perform setups and changeovers of a device configuration in order to respond to high-mix low-volume production. Further, it is desired to perform setups and changeovers with ease and to cause one robot to have a plurality of functions. Consequently, there arises a problem which cannot be addressed by the conventional production system.

The present invention has been devised in view of the problems in the conventional art, and an object thereof is to provide a production system that allows setups and changeovers with ease, causes one robot to exert a plurality of functions, and realizes space saving.

### MEANS FOR SOLVING THE PROBLEMS

To solve the problems, according to an aspect of the present invention, a production system is configured with a workpiece, a workpiece stocker on which the workpiece is placed, a dual-arm robot which is arranged at a transportation outlet of the workpiece stocker, and a second robot which is arranged to face a forward portion of a torso of the dual-arm robot.

To solve the problems, according to another aspect of the invention, the second robot performs a task in a working area of the dual-arm robot.

To solve the problems, according to another aspect of the invention, the second robot performs a task for the workpiece held by the dual-arm robot.

To solve the problems, according to another aspect of the invention, the dual-arm robot includes an arm section equipped with not less than seven shafts including a redundant shaft.

To solve the problems, according to another aspect of the invention, the dual-arm robot performs a task of shifting the workpiece.

To solve the problems, according to another aspect of the invention, the workpiece stocker, the dual-arm robot and the second robot are arranged in line.

To solve the problems, according to another aspect of the invention, the second robot arranged to face the torso of the dual-arm robot is arranged beside the workpiece stocker.

To solve the problems, according to another aspect of the invention, the second robot is a dual-arm robot.

To solve the problems, according to another aspect of the invention, the second robot is a single-arm vertical multi-joint robot.

### EFFECT OF THE INVENTION

According to the present invention described above, the workpiece stocker, the dual-arm robot and the second robot are arranged closely. Thus, it is possible to perform a transporting task and an assembling task in a space almost equal to a space required for manual operation and therefore to reduce a space for production lines.

Moreover, the workpiece shifting task allows transportation of a workpiece placed at random while aligning the workpiece. Thus, it is possible to prevent a system from becoming complicated and therefore to perform setups and changeovers responding to high-mix low-volume production.

### BRIEF DESCRIPTION OF THE DRAWINGS

Fig. 1 illustrates a front view of a dual-arm robot.
Fig. 2 illustrates a perspective view of a production system according to a first embodiment of the present invention.
Figs. 3 to 7 each illustrate workpiece transportation by the dual-arm robot.
Fig. 8 illustrates a perspective view of a production system according to a second embodiment of the present invention.

### DESCRIPTION OF THE EMBODIMENTS

Embodiments will now be described with reference to the accompanying drawings, wherein like reference numerals designate corresponding or identical elements throughout the various drawings.

### FIRST EMBODIMENT

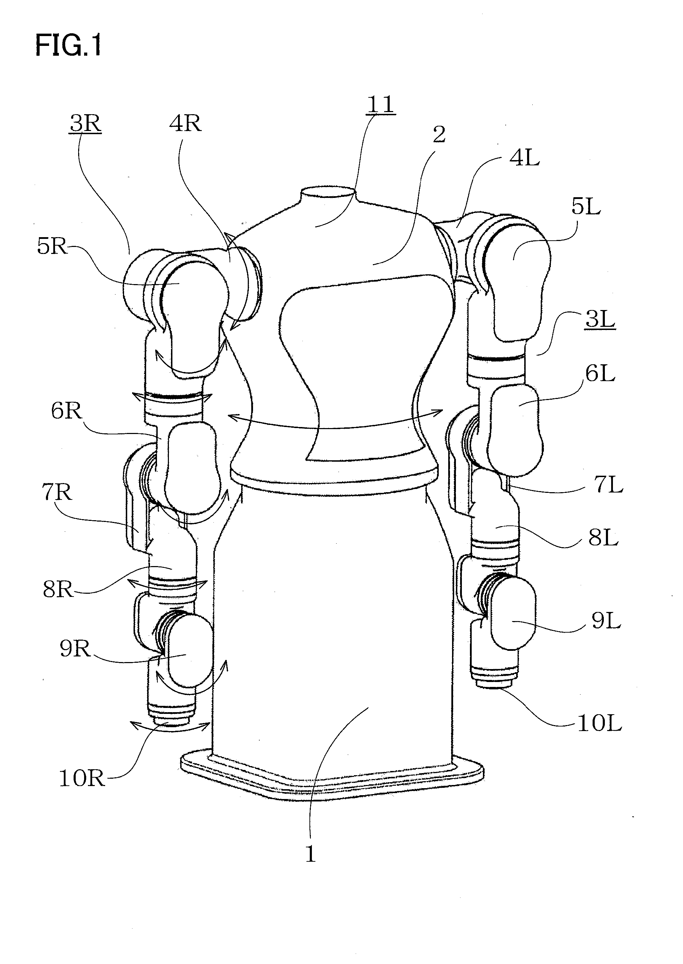

A dual-arm robot 11 according to the present invention will be described with reference to Fig. 1.

A base section 1 is secured using an anchor bolt (not illustrated), and a turnable torso section 2 is installed on the base section 1 in a turnable manner within a vertical plane. A right arm section 3R is provided at a left side of the turnable torso section 2 in the front view, and a right shoulder 4R is provided in a turnable manner within a horizontal plane. A right upper arm "A" 5R is provided on the right shoulder 4R in a swingable manner. A right upper arm "B" 6R is provided on a tip end of the right upper arm "A" 5R. Herein, the right upper arm "B" 6R is imparted with a twisting action for a turning action. Further, a right lower arm 7R is provided on a tip end of the right upper arm "B" 6R in a swingable manner. A right wrist "A" 8R is provided on a tip end of the right lower arm 7R, and a right wrist "B" 9R is provided on a tip end of the right wrist "A" 8R. The right wrist "A" 8R is imparted with a twisting action for a turning action, and the right wrist "B" 9R is imparted with a turning action for a bending action. A right flange 10R is provided on a tip end of the right wrist "B" 9R. To the right flange 10R, a hand (not illustrated) can be connected and a twisting action is imparted. A left arm section 3L including a left shoulder 4L, a left upper arm "A" 5L, a left upper arm "B" 6L, a left lower arm 7L, a left wrist "A" 8L, a left wrist "B" 9L and a left flange 10L is provided at a right side when being seen from an upper surface, in a manner similar to that described above.

Such a configuration has a feature in that the turnable torso section 2, the right arm section 3R and the left arm section 3L are operated to cause the hand to be attached to the tip end of each of the right flange 10R and the left flange 10L.

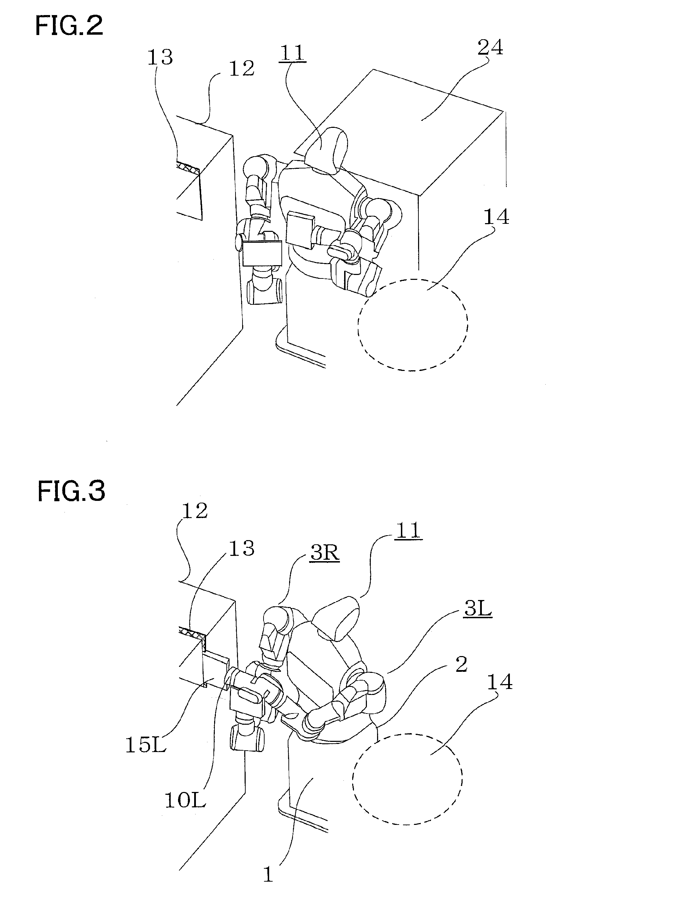

A component production system using the dual-arm robot 11 will be described in detail with reference to Figs. 2 to 7.

The first dual-arm robot 11 transports a workpiece 13, which is stored in a workpiece stocker 12 conveyed from a left side of each figure, to a working area 14 at a right side of each figure in such a manner that the right arm section 3R and the left arm section 3L perform a task of shifting the workpiece 13. Then, a second dual-arm robot 21 that faces the first dual-arm robot 11 mounts a component 20 on the workpiece 13 to assemble a workpiece component.

The first dual-arm robot 11 is arranged between the workpiece stocker 12 and the working area 14. The first dual-arm robot 11 has a right hand 15R and a left hand 15L which are in initial positions on a straight line connecting between the workpiece 13 and a center of the working area 14. The right hand 15R and the left hand 15L cause the workpiece 13 to move linearly from the workpiece stocker 12 to the working area 14. The first dual-arm robot 11 places the workpiece component produced in the working area 14 on a transportation tray 24 arranged in a direction orthogonal to the workpiece stocker 12 and the working area 14, with a position of the workpiece component set thereby, so that the workpiece component is transferred to a subsequent process.

In the first dual-arm robot 11, the right arm section 3R and the left arm section 3L are each equipped with seven shafts including a redundant shaft so as to approach the turnable torso section 2. Thus, distances from the workpiece stocker 12 and the working area 14 to the first dual-arm robot 11 become shorter than a movable range of the first dual-arm robot 11. As a result, the workpiece stocker 12 and the working area 14 as well as the transportation tray 24 are arranged closely to such a degree that the opposite arm section to the workpiece placement position reaches the workpiece 13. For example, it is apparent from Figs. 2 and 3 that it is possible to hold the workpiece 13 stored in the workpiece stocker 12 by the action of the left arm section 3L.

Herein, the working area 14 does not mean an area to be obtained from a movable range of the first dual-arm robot, but means an area where the first dual-arm robot and the second dual-arm robot assemble a workpiece component.

Next, the workpiece transporting task will be described. First, the operation of the left arm section 3L, i.e., the operation of picking up the workpiece 13 stored in the workpiece stocker 12 will be described with reference to Fig. 3. In the first dual-arm robot 11, the turnable torso section 2 turns by a predetermined angle with respect to the base section 1 in the direction of the workpiece stocker 12. As illustrated in Fig. 2, the left arm section 3L changes from an initial posture to a pickup posture to pick up the workpiece 13 in such a manner that each shaft rotates by a predetermined angle, in accordance with an operation taught in advance. Thus, the left hand 15L attached to the left flange 10L of the left arm section 3L holds the workpiece 13. At this time, the right arm section 3R is in an initial posture or is brought into such a posture as to be located at a position where the right arm section 3R does not interfere with a movement trail of the left arm section 3L. Herein, the workpiece 13 is aligned to a certain degree in the workpiece stocker 12. However, the workpiece 13 is not placed at an accurate position, but is placed to a degree that the left hand 15L can hold the workpiece 13. That is, the workpiece stocker 12 is slightly larger in size than the workpiece 13. The plurality of workpieces 13 are not necessarily placed at an identical position in the workpiece stocker 12 without fail.

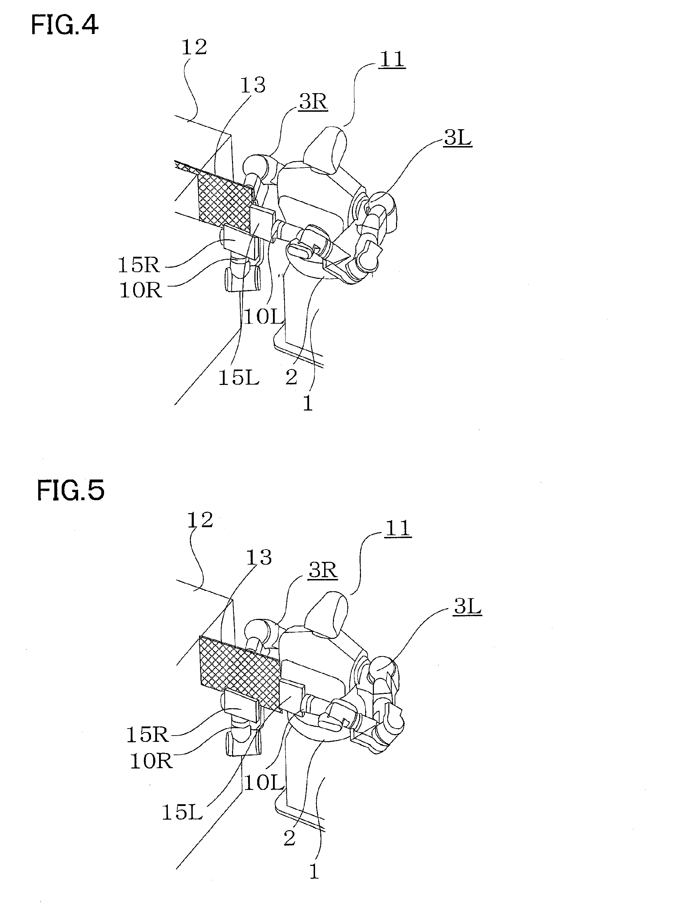

Next, as illustrated in Fig. 4, the left hand 15L that holds the workpiece 13 pulls the workpiece 13 out of the workpiece stocker 12. Herein, the right arm section 3R is brought into such a posture that the right hand 15R attached to the right flange 10R comes into contact with the workpiece 13 in such a manner that each shaft rotates by a predetermined angle. As illustrated in Fig. 5, the left arm section 3L is brought into such a posture that the right hand 15R is located at a predetermined position of the workpiece 13 (a center portion of the workpiece 13) in the state in which the left hand 15L holds the workpiece 13. Then, the right arm section 3R is brought into such a posture that the right hand 15R slightly moves in a certain direction of the workpiece 13 (an upper direction in Fig. 5) . When a contact sensor (not illustrated) detects contact of the workpiece 13 with an end of the right hand 15R, the right hand 15R holds the workpiece 13. Herein, if the position of the right hand 15R is different from a position taught in advance, a deviation amount is stored as an error, and a target position obtained by addition or subtraction by the deviation amount is reset for the working area 14. Next, the left hand 15L releases the workpiece 13, and then moves in a certain direction of the workpiece 13 (a left direction in Fig. 5). When a contact sensor (not illustrated) detects contact of the workpiece 13 with an end of the left hand 15L, the left hand 15L holds the workpiece 13 again.

At this time, in the right arm section 3R and the left arm section 3L each holding the workpiece 13, rotation positions of the respective shafts each have an error corresponding to a deviation amount of the workpiece 13 from a predetermined position. The error corresponding to this deviation amount is superimposed on a target position to the working area for placement to set a new target position, and the respective shafts of the right arm section 3R and the left arm section 3L are moved.

Moreover, when holding the workpiece 13 in the workpiece stocker 12, the left hand 15L grasps an accurate position and therefore transports the workpiece 13 to the working area 14 without performing the shifting task.

In the present invention, the contact sensor (not illustrated) detects the contact of the workpiece with the end of the hand. However, the present invention is not limited thereto. A proximity switch or the like having a function identical to that of the contact sensor may be used so long as to detect such contact. This contact may also be obtained from a current or a voltage of an actuator that drives the respective shafts in accordance with a variation of a load to be imposed on the arm section by the contact.

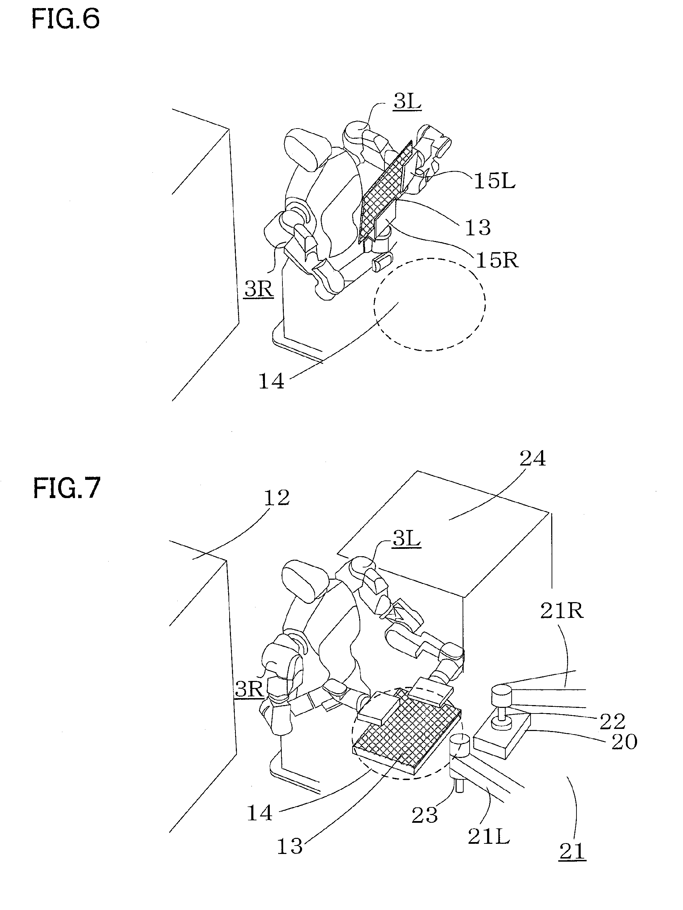

Next, as illustrated in Fig. 6, in a state in which the right hand 15R and the left hand 15L hold the workpiece 13 and the right arm section 3R and the left arm section 3L are maintained at their postures, the turnable torso section 2 turns with respect to the base section 1 in the direction of the working area 14.

In the foregoing description referring to Fig. 5, the right hand 15R and the left hand 15L perform the shifting task at the position where the turnable torso section 2 stops. However, the shifting task may be performed during a period that the turnable torso section 2 moves from the position illustrated in Fig. 5 to a predetermined position illustrated in Fig. 6. In such a case, it is possible to achieve reduction in time.

Finally, as illustrated in Fig. 7, each of the right arm section 3R and the left arm section 3L is brought into a predetermined posture such that the workpiece 13 is placed on the working area 14.

Next, a workpiece component assembling task will be described. The position of the workpiece 13 transported by the right hand 15R and the left hand 15L is set at the working area 14. On the other hand, the second dual-arm robot 21 is arranged to face the first dual-arm robot 11 with the working area 14 interposed therebetween. As described above, this system is configured such that the first and second dual-arm robots perform the task in the same working area. Herein, the second dual-arm robot 21 includes a right arm section 21R, and a holding tool 22 is attached to a tip end of the right arm section 21R. The second dual-arm robot 21 also includes a left arm section 21L, and a thread fastening tool 23 is attached to a tip end of the left arm section 21L.

The right arm section 21R of the second dual-arm robot 21 holds the component 20 with a predetermined position of the component 20 set. Next, the right arm section 21R rotates by a predetermined angle to mount the component 20 on the workpiece 13. Subsequently, the thread fastening tool 23 attached to the left arm section 21L fastens the workpiece 13 to the component 20.

The thread fastening tool 23 may always be attached to the left arm section 21L. Alternatively, the holding tool may be attached to the left arm section 21L to hold the thread fastening tool if necessary. Moreover, a tool exchanger may be attached to the tip end of the left arm section 21L.

At this time, a wrist shaft of the right arm section 21R is brought into a servo floating state in a thread fastening task. More specifically, the wrist shaft of the right arm section 21R is brought into a state of reducing control rigidity to freely act about an axis of rotation.

The servo floating function allows a relative deviation in hole position between the workpiece 13 and the component 20.

The first dual-arm robot places the workpiece component assembled as described above on a predetermined position of the transportation tray 24, so that the workpiece component is transferred to a subsequent process.

The transportation tray may be a bench to be held by the robot in a subsequent process or may be a conveyor.

### SECOND EMBODIMENT

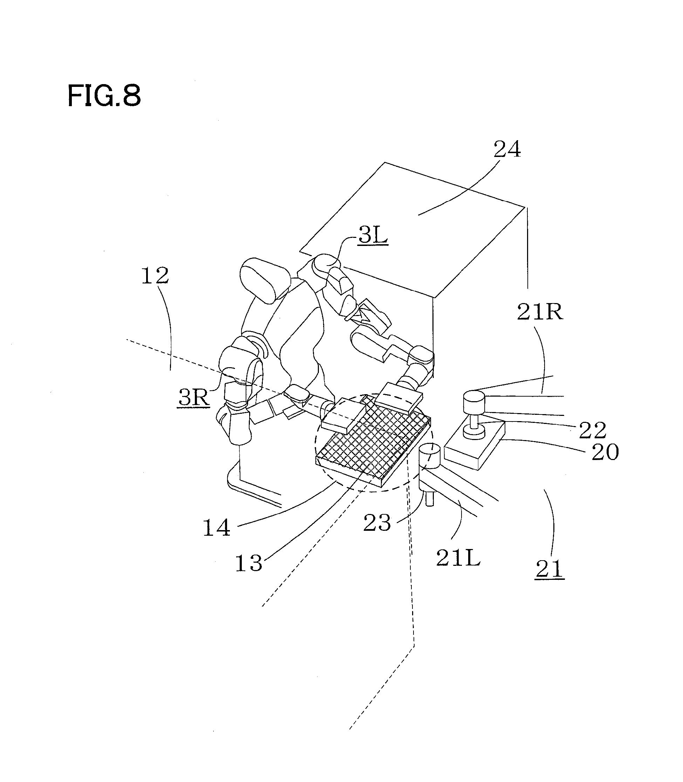

As illustrated in Fig. 8, a first dual-arm robot 11 transports a workpiece 13 stored in a workpiece stocker 12 conveyed from a front side of Fig. 8 to a working area 14 at a right side of Fig. 8 in such a manner that a right arm section 3R and a left arm section 3L perform a task of shifting the workpiece 13. Then, a second dual-arm robot 21 that faces the first dual-arm robot 11 mounts a component 20 on the workpiece 13 to assemble a workpiece component. The second dual-arm robot 21 is arranged to face the first dual-arm robot 11 with the working area 14 interposed therebetween. Moreover, a transportation tray 24 is located at an opposite position to the workpiece stocker 12 with the first dual-arm robot 11 interposed therebetween.

The first dual-arm robot and the second dual-arm robot are arranged as described above, and the workpiece stocker 12 and the transportation tray 24 are arranged as described above, so that a working space can be reduced in size.

Operations of the first dual-arm robot and the second dual-arm robot are similar to those described in the first embodiment; therefore, detailed description thereof will not be given here.

In this embodiment, a rectangular workpiece is described as an example; however, the present invention is not limited thereto. A rectangular parallelepiped workpiece or an oddly shaped workpiece may be employed as a matter of course. In the foregoing description, the second dual-arm robot is used for placement and assembly of a component. Herein, the second robot may be a vertical multi-joint type industrial robot. Moreover, a single-arm robot may be used if necessary.

Further, the second robot is not necessarily provided depending on details of a task, and a working time. In such a case, only the first dual-arm robot may be provided.

### EXPLANATION OF REFERENCE NUMERALS

- 1: Base section
- 2: Turnable torso section
- 3R: Right arm section
- 3L: Left arm section
- 4R: Right shoulder
- 4L: Left shoulder
- 5R: Right upper arm "A"
- 5L: Left upper arm "A"
- 6R: Right upper arm "B"
- 6L: Left upper arm "B"
- 7R: Right lower arm "A"
- 7L: Left lower arm "A"
- 8R: Right wrist "A"
- 8L: Left wrist "A"
- 9R: Right wrist "B"
- 9L: Left wrist "B"
- 10R: Right flange
- 10L: Left flange
- 11: Dual-arm robot
- 12: Workpiece stocker
- 13: Workpiece
- 14: Working area
- 15R: Right hand
- 15L: Left hand

## Claims

1. A production system **characterized by**: a workpiece (13); a workpiece stocker (12) on which the workpiece (13) is placed; a dual-arm robot (11) which is arranged at a transportation outlet of the workpiece stocker (12); and a second robot (21) which is arranged to face a forward portion of a torso (2) of the dual-arm robot (11).

2. The production system according to claim 1, **characterized in that** the second robot (21) performs a task in a working area (14) of the dual-arm robot (11).

3. The production system according to claim 1, **characterized in that** the second robot (21) performs a task for the workpiece held by the dual-arm robot (11).

4. The production system according to claim 1, **characterized in that** the dual-arm robot (11) includes an arm section (3R, 3L) equipped with not less than seven shafts including a redundant shaft.

5. The production system according to claim 1, **characterized in that** the dual-arm robot (11) performs a task of shifting the workpiece (13).

6. The production system according to claim 1, **characterized in that** the workpiece stocker (12), the dual-arm robot (11) and the second robot (21) are arranged in line.

7. The production system according to claim 1, **characterized in that** the second robot (21) arranged to face the torso (2) of the dual-arm robot (11) is arranged beside the workpiece stocker (12).

8. The production system according to claim 1, **characterized in that** the second robot (21) is a dual-arm robot.

9. The production system according to claim 1, **characterized in that** the second robot (21) is a single-arm vertical multi-joint robot.

10. A production system **characterized by**: a workpiece (13); a workpiece stocker (12) on which the workpiece (13) is placed; and a dual-arm robot (11) which is arranged at a transportation outlet of the workpiece stocker (12) , wherein the dual-arm robot (11) performs a task of shifting the workpiece.

11. A manufacturing method **characterized by**: a dual-arm robot (11) which is arranged at a transportation outlet of a workpiece stocker (12); and a second robot (21) which is arranged to face a forward portion of a torso (2) of the dual-arm robot (11), wherein a workpiece (13) placed on the workpiece stocker (12) is subjected to processing by the dual-arm robot (11) and the second robot (21).
